# FASCICULE DE BREVET EUROPEEN

(11) **EP 1 608 050 B1**
(45) Date de publication et mention de la délivrance du brevet: **27.05.2009**
(21) Numéro de dépôt: 05104564.9
(22) Date de dépôt: 27.05.2005
(51) Int. Cl.: H02B 1/38, H05K 5/04

(54) **Porte pour armoire électrique**
Tür für Schaltschrank
Door for an electric switch cabinet

(30) Priorité: 18.06.2004 FR 0406634
(43) Date de publication de la demande: 21.12.2005
(73) Titulaire: Hispano Mecano Electrica S.A., 08786 Capellades (Barcelona) (ES)
(72) Inventeur: Castillo Garcia, Fernando, 08780, Barcelone (ES); Forcadell Carapuig, Jordi, 43550, Tarragone (ES); Macarilla Jover, Albert, 08950, Barcelone (ES); Xaus Regordosa, Lluis, 08700, Igualada-Barcelona (ES)
(74) Mandataire: Bié, Nicolas

(56) Documents cités:
- EP-A1- 0 684 672
- DE-A1- 3 706 315
- DE-U1- 29 600 976
- US-A1- 2002 153 373

## Description

La présente invention concerne une porte pour armoire, notamment destinée à loger des appareils ou organes électriques, et ci-après brièvement désignée "armoire électrique", la porte comprenant un panneau métallique à bords supérieur, inférieur et à bords latéraux rabattus à angle droit par pliage.

Il est souhaitable que la porte résiste aux efforts qui tendent à la déformer, provenant de l'ossature de l'armoire, via les charnières, ou de l'organe de fermeture de la porte ou encore d'organes tels que châssis ou appareils montés sur la porte. Le renforcement du panneau de la porte est donc essentiel et doit être assuré par des moyens efficaces et simples.
Il est connu par la demande de brevet EP 0 684 672 un coffret notamment pour appareillage électrique dans lequel la porte est réalisée à partir d'une tôle unique présentant des lignes de pliage suivant lesquelles sont formés deux bords opposés de la porte. La résistance d'une telle structure est satisfaisante mais elle peut être améliorée.

L'invention a pour but de renforcer de manière simple une porte métallique pour armoire notamment destinée à loger des appareils ou organes électriques.

Selon l'invention, les bords latéraux de la porte comprennent une aile rabattue et, successivement et à partir de l'aile rabattue, des éléments pliés constitués par une aile rentrante, une bande appliquée sur le panneau et doublant l'épaisseur de celui-ci, une aile sortante parallèle à l'aile rentrante et une aile terminale parallèle au panneau ; des traverses raidisseuses sont fixées aux extrémités supérieure et inférieure des ailes terminales des bords latéraux et forment, avec ces ailes terminales, un cadre de renfort du panneau. En outre, la porte comporte des charnières pour être fixée sur l'ossature de l'armoire, ces charnières étant formées par découpe et pliage d'une aile rentrante. La porte métallique possède dés lors un cadre réalisé de manière très simple intégrant notamment directement les charnières dans sa structure. La porte est donc conçue en totalité à partir d'une plaque unique ce qui permet de renforcer sa rigidité.

De préférence, les ailes terminales présentent une rangée de trous à pas régulier, pour monter à hauteur choisie les traverses raidisseuses et éventuellement des traverses de montage, et les traverses raidisseuses sont pourvues d'une rangée de trous de fixation à pas régulier. Le cadre de renfort a ainsi en outre un rôle de montage et permet une grande liberté de montage.

Les traverses raidisseuses peuvent avantageusement avoir une forme de U dont l'âme est percée de la rangée de trous et se prolonge par des pattes qui assurent la fixation aux ailes terminales. Les ailes des traverses en U sont avantageusement appliquées par leur tranche contre la surface du panneau.

La description détaillée qui suit, en regard des dessins annexés, illustre un mode de réalisation donné à titre d'exemple.
La figure 1 représente en perspective du côté intérieur d'une porte d'armoire électrique conforme à l'invention.
La figure 2 est une vue en élévation d'une partie de la porte.
La figure 3 est une vue agrandie d'un détail de la figure 1.

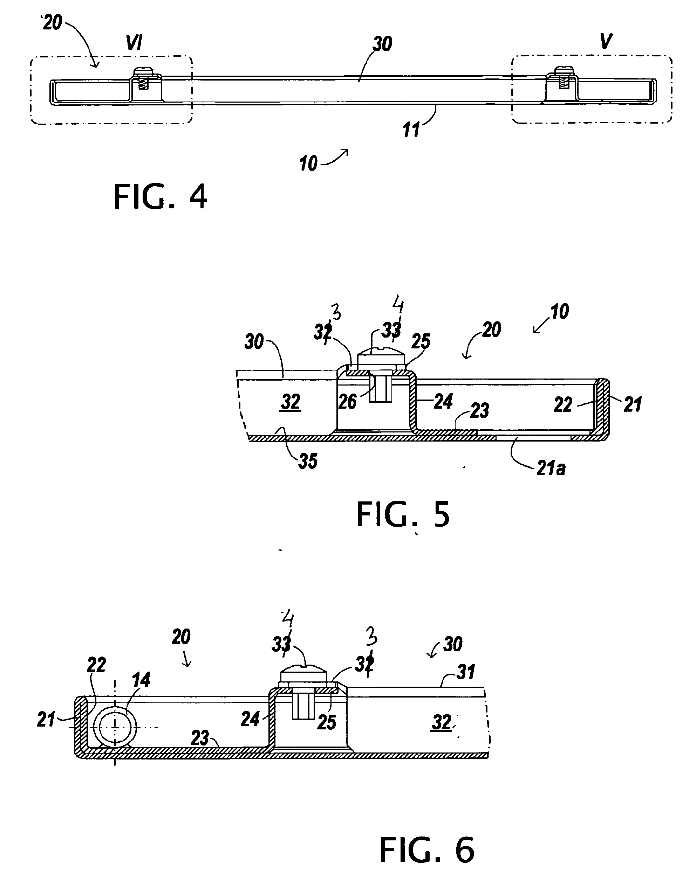

La figure 4 est une coupe selon IV-IV de la porte de la figure 2.
Les figures 5 et 6 représentent à plus grande échelle les extrémités droite et gauche de la figure 4.

La porte 10 illustrée sur les figures est destinée à fermer une armoire électrique. La porte rectangulaire comprend un panneau métallique 11 à bords rabattus à angle droit par pliage. Ces bords sont constitués par des bords supérieur et inférieur 12 et des bords latéraux 13 plus longs que les bords 12. Des charnières 14 sont prévues près d'un bord latéral 13 pour attacher la porte à l'ossature (non représentée) de l'armoire. Les bords 12 sont à simple rabat 12a, tandis que les bords 13 sont pliés, sur la majeure partie de la hauteur de la porte, avec des plis multiples pour former plusieurs ailes successives : à partir d'une première aile 21, rabattue à angle droit par rapport au panneau, une aile rentrante 22 qui est pliée à 180° par rapport à l'aile 21 et qui double celle-ci, une bande de renforcement 23 qui est pliée à angle droit par rapport à l'aile 22 et qui double le panneau 11, une aile sortante 24 qui est pliée à angle droit par rapport à la bande 23 pour être parallèle à l'aile rentrante 22, puis une aile terminale 25 qui est pliée à angle droit par rapport à l'aile 24 pour être parallèle au panneau 11 et contribuer à former un cadre de renfort et de montage 20.

Les ailes 21,22 déterminent ainsi un bord écrasé de bonne rigidité ; la bande 23 est appliquée par exemple par soudage ou collage sur le panneau et a une largeur d'au moins deux à trois fois la hauteur du rabat 21 et de l'aile 22. Une ouverture 21a est prévue dans le panneau 11 et la bande 23 pour installer un organe de fermeture.

L'aile terminale 25 présente une rangée 26 de trous de fixation répartis à intervalles réguliers. Des trous de la rangée 26, par exemple les trous située aux extrémités de la rangée, servent à fixer des traverses de raidissement 30 contribuant avec les ailes 25 à former le cadre de renfort 20. Les traverses 30 ont une section droite en forme de U avec une âme 31 et des ailes 32. L'âme 31 se termine vers chaque aile 25 par une patte 33 fixée au trou respectif de la rangée 26 par un moyen de fixation tel qu'une vis 34. Les ailes 32 s'appliquent sur le verso du panneau 11 par leur tranche 35 et ont une hauteur équivalente à celle des ailes sortantes 24.

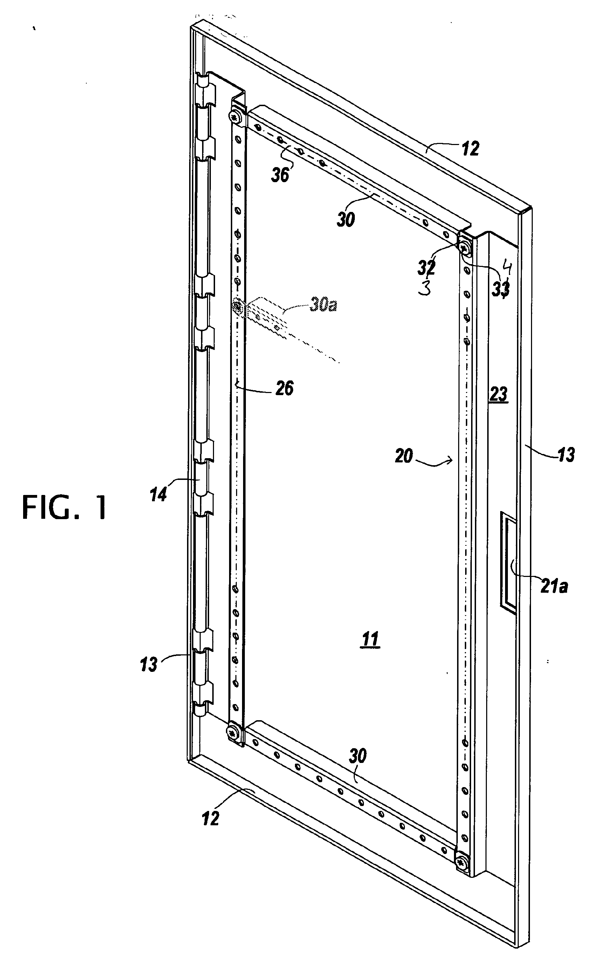

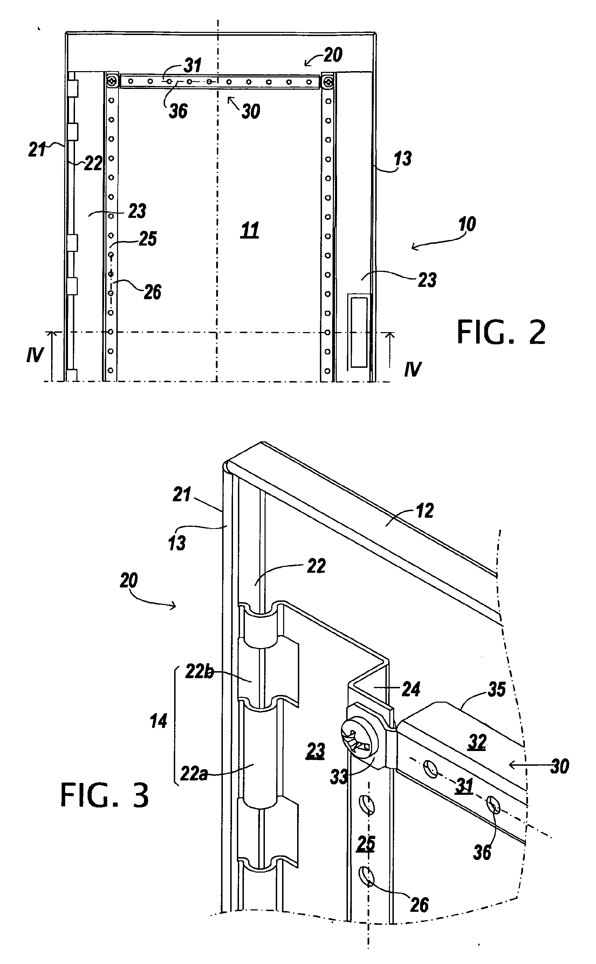

Chaque traverse 30 a, outre sa fonction de rigidité, une fonction de montage pour des organes ou appareils divers à inclure dans l'armoire : il est prévu à cet effet dans l'âme 31 une rangée régulière 36 de trous de fixation pour permettre de rapporter au cadre 20 les organes ou appareils en question. Il convient de remarquer que d'autres traverses de raidissement et/ou de montage (voir en 30a sur la figure 1) peuvent aussi être rapportées aux ailes 25. Les charnières 14 de la porte sont réalisées par découpe et conformation en parties pleines 22a et parties creuses 22b de l'aile rabattue 22 (voir figures 1 et 3). Ces charnières 14 sont par exemple formées suivant un arc de cercle. Avec des charnières 14 façonnées directement à partir de l'aile rabattue de la porte, la porte est alors conçue dans sa totalité à partir d'une plaque unique ce qui permet notamment de renforcer sa rigidité.

## Revendications

1. Porte (10) pour armoire destinée notamment à loger des appareils ou organes électriques, comprenant un panneau métallique (11) à bords latéraux pliés sensiblement à angle droit, dans laquelle
- deux des bords latéraux (13) comprennent chacun une aile rabattue (21) et, successivement et à partir de l'aile rabattue, des éléments pliés constitués par une aile rentrante (22), une bande (23) appliquée sur le panneau (11) et doublant l'épaisseur de celui-ci, une aile sortante (24) parallèle à l'aile rentrante et une aile terminale (25) parallèle au panneau,
- des traverses raidisseuses (30), qui sont fixées aux extrémités supérieure et inférieure des ailes terminales (25) des bords latéraux et, qui forment, avec ces ailes terminales, un cadre (20) de renfort du panneau.
- des charnières (14) sont formées par découpe et pliage d'une aile rentrante (22).

2. Porte selon la revendication 1, dans laquelle les ailes terminales (25) présentent une rangée de trous (26) à pas régulier, pour monter à hauteur choisie les traverses raidisseuses (30) et éventuellement des traverses de montage (30a).

3. Porte selon la revendication 1, dans laquelle les traverses raidisseuses (30) sont pourvues d'une rangée de trous de fixation (36) à pas régulier.

4. Porte selon la revendication 3, dans laquelle les traverses raidisseuses (30) ont une section en forme de U, dont l'âme (31) est dotée de la rangée de trous (36) de fixation et se prolonge par des pattes (33) assurant la fixation aux ailes terminales (25), et dont les ailes (32) sont applicables par leur tranche (35) contre le panneau (11).

## Claims

1. Door (10) for an enclosure intended in particular for housing electrical apparatus or devices, comprising a metal panel (11) with lateral edges folded at approximately a right angle, in which:
- two of the lateral edges (13) each comprise a folded-down flange (21) and, successively and starting from the folded-down flange, folded elements consisting of a re-entrant flange (22), a strip (23) applied on the panel (11) and doubling the thickness thereof, a projecting flange (24) parallel to the re-entrant flange and a terminal flange (25) parallel to the panel;
- stiffening crossmembers (30) are fixed to the upper and lower ends of the terminal flanges (25) of the lateral edges and form, with these terminal flanges, a frame (20) reinforcing the panel;
- hinges (14) are formed by cutting and folding a re-entrant flange (22).

2. Door according to Claim 1, in which the terminal flanges (25) have a row of holes (26) at regular intervals for mounting the stiffening crossmembers (30) and optionally mounting crossmembers (30a) at a chosen height.

3. Door according to Claim 1, in which the stiffening crossmembers (30) are provided with a row of fixing holes (36) at regular intervals.

4. Door according to Claim 3, in which the stiffening crossmembers (30) have a U-shaped section, the core (31) of which is provided with a row of fixing holes (36) and extended by feet (33) ensuring the attachment to the terminal flanges (25), and the flanges (32) of which can be applied via their edge (35) against the panel (11).

## Patentansprüche

1. Tür (10) für einen Schrank, der insbesondere Geräte oder elektrische Organe aufnehmen soll, die eine Metallplatte (11) mit im Wesentlichen im rechten Winkel umgebogenen Seitenrändern aufweist, wobei:
- zwei der Seitenränder (13) jeweils einen umgeklappten Flansch (21) und nacheinander und von dem umgeklappten Flansch ausgehend umgebogene Elemente, die durch einen einspringenden Flansch (22) gebildet werden, ein an der Platte (11) angeordnetes Band (23), das deren Dicke verdoppelt, einen abgehenden Flansch (24) parallel zu dem einspringenden Flansch und einen Endflansch (25) parallel zu der Platte umfassen,
- Versteifungsquerträger (30) am oberen und unteren Ende der Endflansche (25) der Seitenränder befestigt sind und mit diesen Endflanschen einen Verstärkungsrahmen (20) für die Platte bilden,
- Scharniere (14) durch Ausschneiden und Umbiegen eines einspringenden Flansches (22) gebildet sind.

2. Tür nach Anspruch 1, wobei die Endflansche (25) eine Reihe von Löchern (26) mit gleichmäßigem Abstand aufweisen, um die Versteifungsquerträger (30) und möglicherweise Montagequerträger (30a) auf einer gewählten Höhe anzubringen.

3. Tür nach Anspruch 1, wobei die Versteifungsquerträger (30) mit einer Reihe von Befestigungslöchern (36) mit gleichmäßigem Abstand versehen sind.

4. Tür nach Anspruch 3, wobei die Versteifungsquerträger (30) einen U-förmigen Querschnitt aufweisen, dessen Steg (31) mit einer Reihe von Befestigungslöchern (36) versehen ist und der durch Ansätze (33) verlängert ist, die die Befestigung an den Endflanschen (25) gewährleisten, und dessen Flansche (32) durch ihren Rand (35) an der Platte (11) angebracht werden können.
